(19) Europäisches Patentamt
European Patent Office
Office européen des brevets

(11) **EP 3 598 095 A1**

(12) **DEMANDE DE BREVET EUROPEEN**

(43) Date de publication:
22.01.2020 Bulletin 2020/04

(51) Int Cl.:
*G01L 3/14* (2006.01)   *B62M 6/00* (2010.01)

(21) Numéro de dépôt: **19186197.0**

(22) Date de dépôt: **15.07.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **20.07.2018 FR 1856775**

(71) Demandeur: **Commissariat à l'énergie atomique et aux énergies alternatives**
**75015 Paris (FR)**

(72) Inventeurs:
• PORTE, Florian
 38054 GRENOBLE CEDEX 09 (FR)
• DUPONT, Thomas
 26270 Loriol-sur-Drôme (FR)
• MARTIN, Pierre-Jean
 26270 Loriol-sur-Drôme (FR)

(74) Mandataire: **Brevalex**
**95, rue d'Amsterdam**
**75378 Paris Cedex 8 (FR)**

(54) **MOYEU DE ROUE DE CYCLE PERMETTANT LA DETERMINATION DU COUPLE D'ENTRAINEMENT ET DE LA PUISSANCE MOTRICE FOURNIS PAR LE CYCLISTE**

(57)    Moyeu de roue de cycle permettant la détermination du couple d'entraînement d'une roue de cycle, comportant un flasque latéral de couple (24) destiné à la fixation des rayons de transmission (18) transmettant le couple du moyeu de roue à la jante (16), des jauges de déformation et/ou des paires de jauges de déformations (28.1, 28.2, 28.3, 28.4) disposées sur le flasque latéral de couple (24) à proximité de au moins certains points d'attache (32) des rayons (18), lesdites jauges de déformation(28.1, 28.2, 28.3, 28.4) étant configurées pour délivrer des signaux permettant de déterminer le couple d'entraînement de la roue.

FIG.3A

**Description**

## DOMAINE TECHNIQUE ET ÉTAT DE LA TECHNIQUE ANTÉRIEURE

La présente invention se rapporte à un moyeu de roue de cycle permettant la détermination du couple d'entraînement de ladite roue et de la puissance motrice fournis par le cycliste et à un procédé de détermination dudit couple d'entraînement et de ladite puissance motrice.

Les mesures du couple d'entraînement et de la puissance motrice d'une roue de cycle permettent d'évaluer les performances d'un cycliste, par exemple au cours de son entraînement.

La puissance motrice peut être obtenue à partir de mesures au niveau du pédalier. Or dans ce cas il n'est pas tenu compte des pertes de transmission.

La puissance motrice peut également être obtenue à partir de mesures au niveau du moyeu de la roue motrice, généralement la roue arrière.

Le document FR3001290 décrit un moyeu de détermination de couple comportant un corps central monté libre en rotation autour d'un arbre central définissant l'axe de rotation, et deux flasques latéraux pour la fixation des rayons. Des jauges de déformation sont montées sur le corps central qui sert de corps d'épreuve. Le moyeu décrit dans ce document ne permet pas d'évaluer l'influence des efforts inutiles à la propulsion du vélo, tels que le poids du cycliste et l'inclinaison du vélo.

On cherche à améliorer la fiabilité de la détermination de cette puissance motrice.

## EXPOSÉ DE L'INVENTION

C'est par conséquent un but de la présente invention d'offrir un moyeu de roue de cycle permettant de déterminer de manière fiable le couple moteur et la puissance motrice fournis par le cycliste.

Le but énoncé ci-dessus est atteint par un moyeu de roue de cycle comportant un corps central destiné à être monté libre en rotation autour d'un arbre central, des flasques latéraux destinés à la fixation d'une extrémité des rayons de roue, parmi lesquels un flasque latéral de couple destiné à la fixation d'au moins une partie des rayons transmettant le couple du moyeu à la jante, et des jauges de déformation disposées sur le flasque latéral de couple au niveau des zones où se concentraient les forces appliqués aux rayons, par exemple à proximité de au moins certains points d'attache des rayons.

L'inventeur s'est rendu compte qu'en plaçant des jauges de déformation dans ces zones, il obtenait des signaux présentant une sensibilité à la force tangente qui correspondait à l'effort de propulsion du cycliste et des sensibilités aux forces parasites qui ne participent pas à la propulsion, telles que la force frontale due au poids du cycliste et la force latérale due au balancement lors du pédalage, et que chacune de ces sensibilités pouvait être caractérisée de manière indépendante, par exemple sur un banc de tests afin d'établir un algorithme qui permet d'extraire la valeur de ces forces à partir de l'ensemble des mesures provenant des jauges, pour ensuite déterminer de manière fiable le couple moteur et donc la puissance motrice.

En outre, les mesures obtenues par ce moyeu de roue instrumenté permettent très avantageusement de détecter si les rayons présentent la même tension ou non et de corriger cette tension le cas échéant.

De plus ces mesures permettent également de distinguer les différents gestes de pédalage du cycliste, par exemple si le cycliste pédale en étant assis, s'il pédale en étant en position debout, s'il est en danseuse ou s'il est en roue libre par exemple.

Le moyeu de roue instrumenté selon l'invention permet donc un suivi très fin des performances du cycliste, ce qui peut être très utile lors des entraînements.

Le moyeu instrumenté selon l'invention est de réalisation relativement simple, puisqu'il comporte des jauges de déformation fixées sur le flasque, par exemple collées.

De manière préférée, les jauges sont disposées au plus près des points d'attache des rayons, ce qui permet d'obtenir des signaux non pollués pas d'autres efforts mécaniques appliqués au moyeu, tels que ceux générés par les cliquets de la roue libre à cliquets présente dans le moyeu.

La présente invention a alors pour objet un moyeu de roue de cycle permettant la détermination du couple d'entraînement d'une roue de cycle, comportant un axe longitudinal, un corps central destiné à être monté libre en rotation autour d'un arbre central, l'axe longitudinal étant destiné à être coaxial à l'arbre central, des flasques latéraux destinés à la fixation d'une extrémité de rayons de roue, parmi lesquels un flasque latéral de couple destiné à la fixation d'au moins une partie des rayons de transmission transmettant le couple du moyeu à la jante, des jauges de déformation et/ou des paires de jauges de déformation montées sur le flasque latéral de couple en des zones où se concentrent les forces appliquées aux rayons, lesdites jauges de déformation étant disposées de sorte à délivrer des signaux permettant de déterminer le couple d'entraînement de la roue.

Dans un exemple avantageux, au moins le flasque latéral de couple comporte des points d'attache des premières extrémités des rayons, et dans lequel les jauges de déformation et/ou paires de jauges de déformation sont situées à proximité de au moins certains points d'attache des rayons, avantageusement au plus près des points d'attache.

Dans un exemple de réalisation, les jauges de chaque paire de jauges de déformation sont montées en demi-pont de Wheatstone, et les paires de jauges sont disposées dans des zones du flasque latéral de couple subissant simultanément une traction et une compression. Par exemple, les paires de jauges de déformation sont montées sur une face extérieure du flasque latéral de couple sensiblement orthogonalement à l'axe longitudinal du moyeu.

Dans un autre exemple de réalisation, chaque jauge est disposée sur une zone du flasque latéral de couple subissant à un instant donné une traction ou une compression. Chaque jauge de déformation peut être disposée dans un plan sensiblement parallèle à l'axe longitudinal du moyeu.

Par exemple, les jauges sont réparties angulairement de manière régulière sur le flasque latéral de couple autour de l'axe longitudinal du moyeu et/ ou les jauges de déformation et/ou paires de jauges de déformation sont disposées sur une zone radialement extérieure du flasque latéral de transmission.

Selon une caractéristique additionnelle, le flasque latéral de couple comporte des oreilles en saillie radiale vers l'extérieur, chaque oreille comportant au moins un point de fixation d'un rayon de transmission, chaque jauge ou paire de jauges étant disposée sur une oreille.

De préférence, les jauges de déformation sont des jauges piézorésistives.

Le moyeu de roue de cycle comporte avantageusement un nombre de jauges de déformation et/ou de paires de jauges de déformation de sorte à fournir des signaux pour au moins trois positions angulaires distinctes sur le corps central du flasque latéral de couple.

La présente invention a également pour objet un système de détermination de la puissance d'entraînement d'une roue de cycle comportant un moyeu de roue de cycle selon l'invention, et des moyens de détermination de la vitesse angulaire du corps du moyeu par rapport à l'arbre central.

Le système de détermination peut comporter un microcontrôleur auquel sont connectées les jauges, ledit microcontrôleur communiquant avec un ordinateur par une liaison sans fil.

La présente invention a également pour objet une roue de cycle comportant un moyeu de roue de cycle selon l'invention ou un système de détermination selon l'invention, une jante, au moins des rayons de transmission dont une extrémité est attachée au flasque latéral de couple et une autre extrémité est fixée à la jante.

Les rayons de transmission peuvent avantageusement comporter des moyens pour régler leur tension.

La présente invention a également pour objet un cycle comportant un cadre, une première roue et une deuxième roue, la deuxième roue étant une roue selon l'invention, un pédalier entraînant ladite deuxième roue et un ordinateur de bord (communiquant avec le microcontrôleur et affichant des informations sur la puissance d'entraînement du cycliste déterminées à partir des signaux émis par les jauges.

La présente invention a également pour objet une méthode de détermination du couple d'entraînement mettant en oeuvre un moyeu selon l'invention, comporte :

a) la collecte des signaux des jauges de déformation,
b) la détermination du couple d'entraînement à partir des signaux des jauges de déformation et d'une relation reliant les signaux des jauges et une première sensibilité de chaque jauge ou paire de jauges de déformation à une force tangente résultant du couple d'entrainement en fonction de la position angulaire du moyeu, une deuxième sensibilité de chaque jauge ou paire de jauges de déformation à une force frontale résultant du poids du cycliste en fonction de la position angulaire du moyeu, et une troisième sensibilité de chaque jauge ou paire de jauges de déformation à une force latérale résultant de l'inclinaison du moyeu en fonction de la position angulaire du moyeu,

Selon un exemple, la méthode de détermination comporte avantageusement, préalablement à l'étape a) l'étape de détermination de ladite relation à partir des signaux fournis par les jauges lorsque le moyeu est monté sur un banc de mesure.

A l'étape b) le couple de traction $C_T$, le poids P du cycliste, l'inclinaison $\varphi$ de la roue portant le moyeu de roue de cycle et la vitesse angulaire $\theta$ de la roue portant le moyeu de roue de cycle peuvent être calculés.

Par exemple, l'angle d'inclinaison de la roue et la vitesse angulaire de la roue sont déterminés au moyen d'un accéléromètre et d'un gyromètre, à l'étape b), le couple de traction $C_T$ au moins est déterminé.

Selon un autre exemple, la méthode de détermination comporte, préalablement à l'étape a) une étape de réglage des tensions des rayons de transmission comportant :

- collecte des signaux des jauges ou paires de jauges,
- comparaison desdits signaux,
- si la différence entre la valeur d'au moins un signal et les valeurs des autres signaux est supérieure à un seuil donné, un différentiel de tension dans au moins un rayon de transmission par rapport est diagnostiqué,
- détermination du au moins un rayon de transmission présentant un différentiel de tension par rapport aux autres,

- modification de la tension dudit au moins un rayon de transmission,
- vérification de la tension des rayons de transmission.

La présente invention a également pour objet une méthode de détermination de la puissance d'entraînement comportant la détermination de couple d'entraînement en mettant en oeuvre la méthode selon l'invention, et le calcul du produit de la vitesse angulaire de la roue et du couple d'entraînement.

La présente invention a également pour objet une méthode de surveillance de l'état de tensions des rayons de transmission d'une roue selon l'invention, comportant les étapes

- collecte des signaux des jauges ou paires de jauges,
- comparaison desdits signaux,
- si la différence entre la valeur d'au moins un signal et les valeurs des autres signaux est supérieure à un seuil donné, un différentiel de tension dans au moins un rayon de transmission par rapport est diagnostiqué,
- détermination du au moins un rayon de transmission présentant un différentiel de tension par rapport aux autres,
- modification de la tension dudit au moins un rayon de transmission,
- vérification de la tension des rayons de transmission.

La vérification peut être faite au moyen d'un capteur de vibration, tel qu'un microphone ou en comparant les signaux des jauges ou des paires de jauges.

## BRÈVE DESCRIPTION DES DESSINS

La présente invention sera mieux comprise sur la base de la description qui va suivre et des dessins en annexe sur lesquels:

- la figure 1 est une représentation schématique d'un cycle pouvant comporter un moyeu selon l'invention,
- la figure 2 est une vue en perspective d'un moyeu de l'état de la technique,
- la figure 3A est une vue de face d'un exemple de moyeu selon l'invention,
- la figure 3B est une représentation d'un demi-pont de jauges pouvant être mis en oeuvre dans la présente invention,
- la figure 3C est une vue de face d'une roue de cycle comportant un moyeu selon un autre exemple de l'invention,
- la figure 4 est une vue de face d'un autre exemple de moyeu selon l'invention,
- la figure 5 est une vue de face d'un autre exemple de moyeu selon l'invention,
- la figure 6 est une vue de face d'un autre exemple de moyeu selon l'invention,
- les figures 7A à 7D sont des représentations schématiques d'une roue illustrant la force tangente, la force frontale, la force latérale et l'inclinaison de la roue respectivement,
- la figure 8 est une représentation graphique des signaux des jauges du moyeu de la figure 3C,
- la figure 9 est une représentation graphique du couple moteur en fonction de la tension mesurée par un capteur de référence,
- la figure 10 est une représentation graphique de la sensibilité relative par rapport au capteur de référence des jauges en mV/mV à la force tangente dans quatre positions angulaires différentes du moyeu,
- la figure 11 est une représentation graphique de la sensibilité des jauges en mV/Bars à la force frontale en fonction de la position angulaire du moyeu,
- la figure 12 est une représentation graphique des signaux en mV des jauges du moyeu de la figure 3C en fonction du temps dans le cas d'une roue montée sur un vélo en roue libre
- la figure 13 est une représentation graphique de la sensibilité des jauges en mV/Bars à la force latérale en fonction de la position angulaire du moyeu,
- la figure 14 est une représentation graphique de la somme S=J1+J2+J3+J4 pour un effort tangent appliqué selon 4 positions angulaires différentes,
- la figure 15 est une représentation graphique des sommes J1+J2+J3+J4 et J1+J3-J2-J4 au cours du temps,
- les figures 16 et 17 sont des représentations graphiques des signaux émis par un accéléromètre et un gyromètre et pouvant être utilisés dans la présente invention,
- les figures 18 et 19 sont des représentations graphiques de la puissance motrice instantanée calculée grâce à la deuxième méthode de détermination,
- la figure 20 est une représentation graphique de spectres sonores d'un rayon de roue.

## EXPOSÉ DÉTAILLÉ DE MODES DE RÉALISATION PARTICULIERS

La présente invention sera décrite principalement à un cycle à deux roues, mais l'invention s'applique à un moyeu de roue pouvant équiper tout type de cycle, par exemple à une roue ou à trois roues ou plus. En outre, le moyeu selon l'invention peut s'appliquer à des cycles uniquement propulsés par l'énergie du cycliste et également à des vélos à propulsion assistée, par exemple électriquement

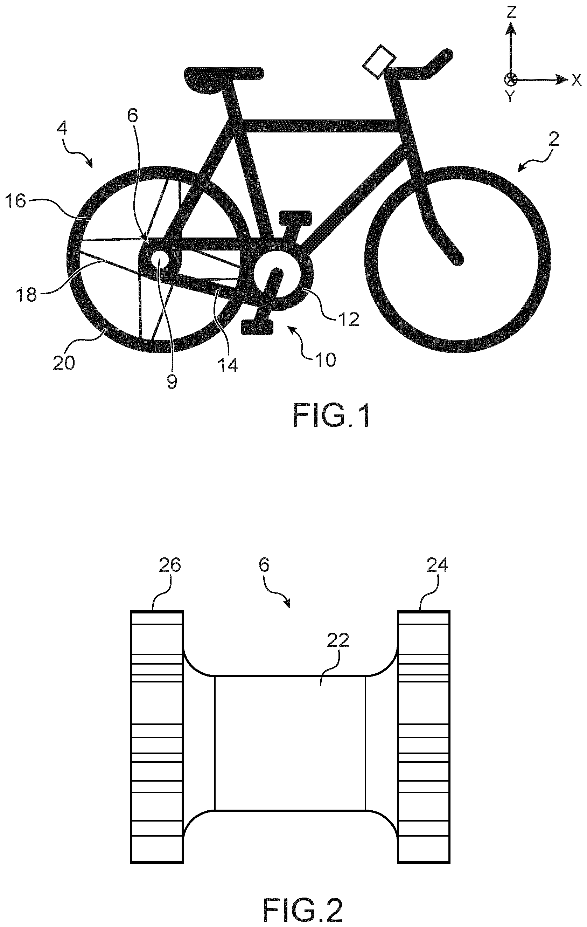

Sur la figure 1, on peut voir un exemple de cycle à deux roues pouvant mettre en oeuvre le moyeu selon l'invention.

Le cycle comporte une roue directrice 2 et une roue motrice 4. La roue motrice 4 est généralement disposée à l'arrière par rapport à la position du cycliste. La roue motrice 4 comporte un moyeu 6 monté libre en rotation sur un arbre de rotation 9. Le moyeu 6 comporte au moins un pignon 8.

Le cycle comporte un pédalier 10 muni d'au moins un pignon 12 qui entraine le pignon 8 porté par un moyeu 6 par l'intermédiaire d'une chaîne 14.

La roue motrice comporte une jante 16 reliée au moyeu 6 par des rayons. La jante 16 porte généralement un pneumatique 20.

Au moins une partie des rayons sert à transmettre le couple du moyeu 6 à la jante 16.

Sur la figure 2, on peut voir un exemple de moyeu 6. Il comporte un corps central 22 monté libre autour de l'arbre de rotation 9 et deux flasques latéraux 24, 26.

Par exemple, un flasque latéral 24, dit flasque latéral de couple, sert à la fixation des rayons transmettant le couple du moyeu à la jante et un flasque latéral 26, dit flasque latéral de centrage, sert à la fixation des rayons assurant le centrage du moyeu par rapport à la jante. Les rayons 18 sont désignés « rayons de transmission ».

Généralement les rayons de centrage sont orientés radialement à partir du moyeu vers la jante et les rayons de transmission du couple 18 sont inclinés par rapport à la direction radiale.

La tension des rayons peut être ajustée. Pour cela un écrou, appelé tête de rayon, est prévu à une extrémité du rayon, soit côté jante, soit côté moyeu. En tournant cet écrou dans un sens ou dans l'autre, la tension du rayon est modifiée. On cherche à avoir la même tension sur chaque rayon.

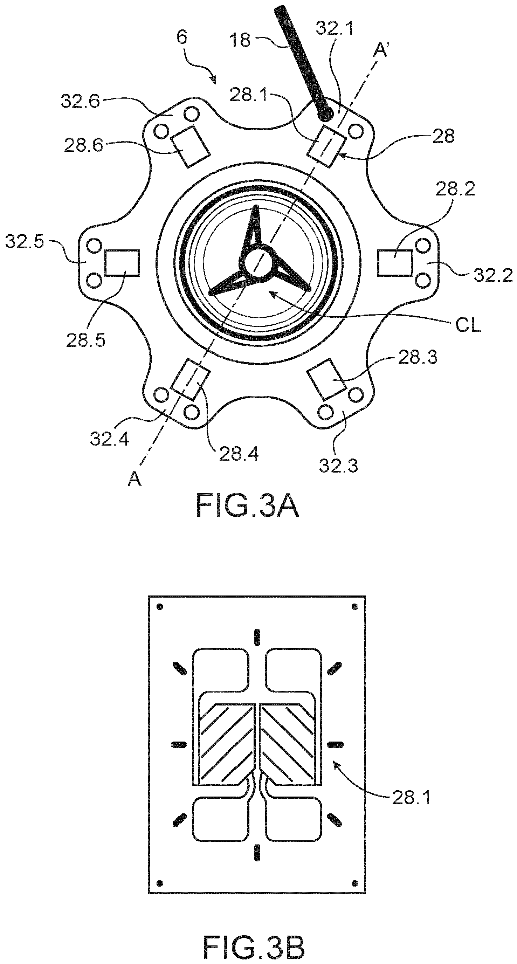

Sur la figure 3A, on peut voir un exemple d'un moyeu selon l'invention.

L'invention s'applique au moyeu transmettant le couple à la jante, il sera désigné « moyeu moteur ».

Selon l'invention, le moyeu moteur 6 comporte un système de mesure comportant des dispositifs de mesure de déformation 28 disposés à proximité des points de fixation des rayons de transmission 18. Les dispositifs de mesure de déformation 28 comportent une ou plusieurs jauges de déformation fixées, par exemple collées, sur le flasque latéral de couple 24. Le flasque latéral de couple 24 sur lequel sont fixées les jauges forme un corps d'épreuve qui traduit une force ou un couple en une déformation mécanique, qui est mesurée par une variation de résistance électrique de la ou des jauges. Le corps d'épreuve et les jauges forment un organe sensible à la force motrice mais également aux forces qui ne sont pas utiles à la propulsion de vélo. Grâce à cet organe sensible, il est possible d'isoler la force motrice et de calculer le couple d'entraînement et donc la puissance motrice. Les jauges de contrainte sont disposées sur le flasque de couple aux endroits où se concentrent les forces appliquées aux rayons.

Dans l'exemple représenté, les jauges de contrainte sont disposées à proximité des points d'attache des rayons au flasque latéral de couple. De préférence, les jauges de déformation sont disposées à une distance comprise entre 1 mm et 2 cm de points d'attache.

En variante, le flasque latéral de couple est configuré pour localiser la concentration des forces appliquées aux rayons en des zones différentes des points d'attache, par exemple en amincissant les portions du flasque de couple portant les points d'attache.

Sur la figure 3A, le flasque latéral de couple 24 comporte un anneau extérieur 32 muni de six oreilles 32.1 à 36.6, chaque oreille comporte deux points de fixation de deux rayons de transmission 18. Dans cet exemple, les oreilles sont réparties angulairement de manière régulière.

Les rayons 18 s'étendent de manière symétrique à partir d'une oreille en direction de la jante, par rapport à un axe radial AA.

Dans cet exemple, les dispositifs de mesure de déformation 28 sont disposés dans des zones subissant à la fois une traction et à la fois une compression. Les dispositifs de mesure de déformation 28 comportent chacun une paire de jauges montées en demi-pont de Wheatstone. Chacune des jauges est sensible à l'extension et à la compression, le montage en demi-pont permet d'ajouter ces deux effets.

Des paires de jauges 28.1 à 28.6 sont placées sur les oreilles 32.1 à 32.6 respectivement.

Sur la figure 3B, on peut voir un exemple d'une paire de jauges de déformation 28.1 montées en demi-pont.

Les jauges sont placées au plus près des points d'attache des rayons sur le moyeu. Cette disposition permet avantageusement d'éviter l'influence des déformations dues au mécanisme à cliquets CL généralement disposé dans le moyeu.

Dans l'exemple de moyeu représenté sur la figure 3A, de manière avantageuse les jauges sont fixées directement sur les oreilles au plus près des points d'attache.

Un renfort mécanique peut avantageusement être prévu pour répartir la charge des cliquets sur la périphérie du moyeu.

**EP 3 598 095 A1**

En variante, le système de mesure comporte autant de paires de jauges que d'oreilles, voire autant de paires de jauges que de rayons.

L'orientation des jauges peut être déterminée avantageusement en modélisant les forces générées par les rayons sur les différentes zones du flasque latéral de couple afin de déterminer quelles zones subissent une extension et quelles zones subissent une compression.

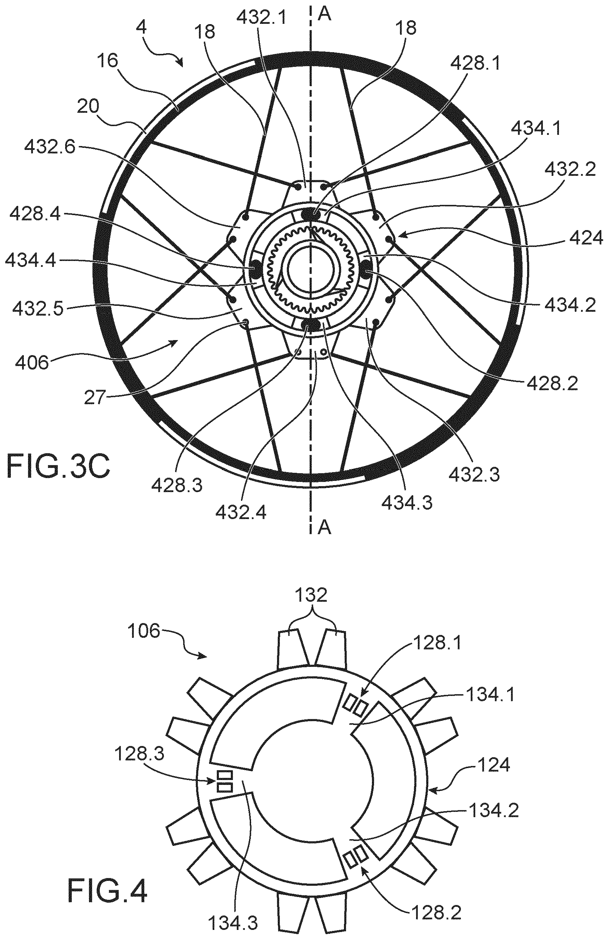

Sur la figure 4, on peut voir un autre exemple de moyeu 16 comportant un flasque latéral de couple 124 comprenant trois pattes 134.1 à 134.3 connectant la partie centrale du flasque à l'anneau extérieur. Dans cet exemple, les moyens de mesure peuvent comporter trois paires de jauges de déformation 128.1, 128.2 et 128.3 montées chacune sur une patte et disposés radialement. En variante, une paire de jauges est montée sur chaque oreille 132.

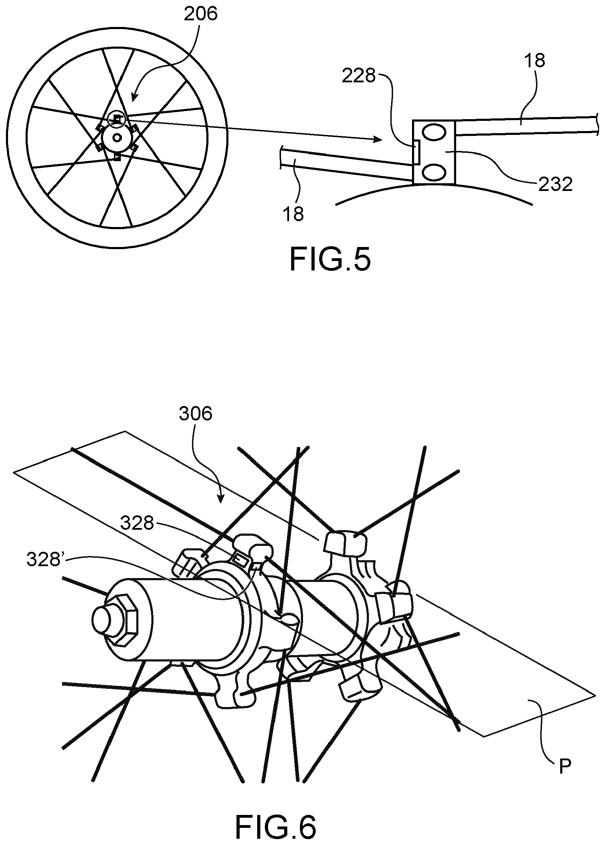

Sur la figure 5, on peut voir un autre exemple de moyeu selon l'invention. Les attaches des rayons 18 sont telles que les rayons 18 s'étendent dans une direction quasi-tangentielle à un cercle centré sur l'axe de rotation. Les rayons sont fixés par paire à des oreilles 232, les deux points d'attache étant disposés radialement. La zone située entre les deux points d'attache subit uniquement une extension ou une compression lorsqu'un effort est appliqué, une seule jauge 228 peut alors être mise en oeuvre.

Les jauges sont disposées sur l'oreille entre les deux points d'attache.

Sur la figure 6, on peut voir encore un autre exemple de moyeu dans lequel les rayons sont quasiment dans le même plan P, les jauges sont montées sur l'oreille orientées perpendiculairement à ce plan P. Dans cet exemple, les jauges peuvent être disposées soit dans le plan du moyeu, dans ce cas la zone subit également une traction et une compression, une paire de jauges 328 est alors mise en oeuvre, soit dans un plan orthogonal au plan du moyeu, dans ce cas la zone subit uniquement une extension ou une compression, une jauge simple 328' est mise en oeuvre.

Il sera compris que la disposition et le nombre de jauges dépendent de la géométrie du moyeu et la configuration des points d'attache les uns par rapport aux autres. De préférence, au moins trois jauges ou paires de jauge en demi-pont de Wheatstone sont mis en oeuvre, de préférence réparties angulairement de manière régulière autour de l'axe du moyeu.

Les jauges sont de préférence des jauges piézorésistives car elles sont plus adaptées aux basses fréquences, et le traitement des signaux est plus rapide et les résultats sont plus précis par rapport à ceux de jauges piézoélectriques, néanmoins la mise en oeuvre de jauges piézoélectriques est envisageable.

Les jauges sont reliées à un convertisseur analogique/numérique convertissant la variation de tensions aux bornes des demi-ponts, éventuellement intégré à un microcontrôleur UC Le microcontrôleur UC assure le traitement des signaux numériques, tel que décrit ci-dessous. Le microcontrôleur est porté par une carte électronique. De préférence la carte a la même forme que le flasque de manière à se placer contre celui-ci afin de réduire l'encombrement ainsi que pour faciliter la connexion entre la carte et les jauges. Les jauges et le microcontrôleur sont alimentés par une batterie par exemple assemblée sur la carte électronique. La carte électronique communique avantageusement avec un ordinateur de bord, désigné C, pouvant être fixé au guidon de la bicyclette (figure 1). L'ordinateur de bords est avantageusement muni d'un écran de manière à afficher les performances en temps réel ou à les enregistrer pour un post-traitement. La carte électronique peut communiquer avec un ordinateur fixe de type PC permettant de suivre et de traiter les performances du cycliste à distance de préférence par transmission sans fil. Pour cela elle est équipée d'une antenne de transmission. Par exemple le signal est transmis selon la norme Bluetooth® ou ANT et par ondes radio.

Plusieurs méthodes de détermination de la puissance motrice fournie par le cycliste à partir du moyeu instrumenté selon l'invention vont maintenant être décrites.

Préalablement à la mise en oeuvre d'une méthode de détermination de la puissance motrice fournie par le cycliste, une étape de calibration est réalisée. Les paramètres de calibration obtenus sont enregistrés dans le microcontrôleur.

De préférence, on vérifie l'existence d'un déséquilibre dans la tension des rayons et on le corrige. Cette étape a de préférence lieu sur banc en usine.

De manière très avantageuse, le moyeu selon l'invention permet de détecter ce déséquilibre dans la tension des rayons et ensuite de le corriger. Cette étape d'équilibrage des tensions des rayons est de préférence réalisée avant l'utilisation du moyeu afin d'optimiser la planéité de la roue et d'éviter une erreur dans la détermination du couple d'entraînement. Le seuil en pourcentage au-delà duquel on considère qu'il y a un déséquilibre peut être paramétrable, il est par exemple de l'ordre de 10%.

En effet, la lecture des signaux des jauges permet de détecter un déséquilibre dans la tension des rayons lorsque la roue n'est soumise à aucun effort, i.e. lorsque le vélo est à l'arrêt et que le cycliste n'est pas sur le vélo. Par exemple, si le signal de l'une des jauges montre une déviation significative par rapport aux autres signaux, cela peut signifier un déséquilibre des tensions des rayons.

Après cette étape de détection, le réglage de la tension des rayons peut être effectué en accordant la fréquence de vibration des rayons lorsqu'ils sont sollicités par un impact, à l'aide d'une analyse vibratoire, de type transformée de Fourier ou sur le principe d'un accordeur de guitare. On mesure la fréquence de résonance avec un capteur de vibration, comme par exemple un microphone piézorésistif ou piézoélectrique. Cette méthode permet un réglage très précis de

6

la tension de chaque rayon.

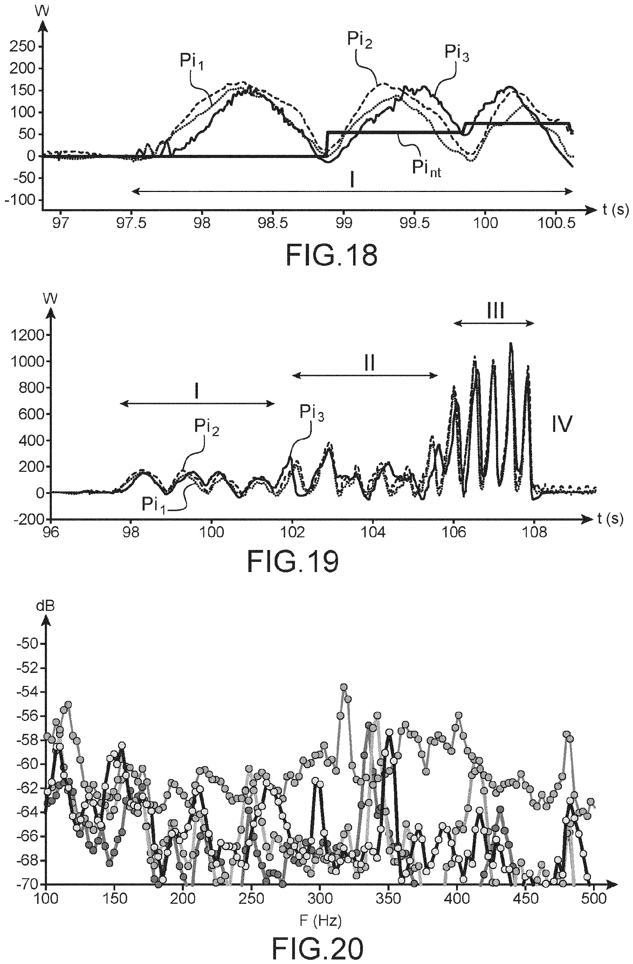

Sur la figure 20, on peut voir les spectres sonores en dB obtenus par transformée de Fourrier rapide en fonction de la fréquence en Hz, sur les signaux d'un micro placé sur le moyeu de la figure 3C ou à proximité des roues, lorsque le vélo est à l'arrêt et n'est soumis à aucun effort. Chaque spectre correspond à une tension différente d'un rayon. On observe que les fréquences principales varient de 320 à 350Hz selon la tension des rayons. La fréquence est théoriquement proportionnelle à la racine carrée de la tension. Cette méthode utilisant un dispositif de mesure, autre que les jauges permet d'ajuster la tension des rayons indépendamment de la sensibilité des jauges. Elle peut ainsi permettre de corriger une éventuelle dérive de celles-ci.

En variante, le réglage peut être réalisé en utilisant directement les signaux fournis par les jauges au lieu de recourir à un capteur de vibration.

Le réglage de la tension des rayons est obtenu en manipulant les écrous à l'extrémité des rayons au moyen d'un outil approprié, tel qu'une pince ou une clé.

Une étape de « Remise à Zéro » peut avantageusement être effectuée avant utilisation du vélo pour compenser les écarts de sensibilités des jauges dues aux variation de tension des rayons sans avoir à régler ceux-ci ou pour compenser une variation de sensibilités une fois que la tension des rayons a été réglée, en appliquant un coefficient correctif sur les valeurs provenant de la calibration sur banc, enregistrées dans le microcontrôleur. Ce réglage permet de réduire sensiblement, voire supprimer, un effet parasite sur un ou des signaux émis par les jauges. Avantageusement les paramètres «d'usine» peuvent être restituées sur demande de l'utilisateur.

Chacun de ces signaux fournis par les jauges dépend :

- du couple moteur ou couple d'entraînement, appliqué à la roue par l'effort « efficace » du cycliste, i.e. la force tangente à la roue, qui permet de faire avancer la bicyclette ; toutes les jauges quelle que soit leur position angulaire sont sensibles à cette force tangente,
- des efforts « parasites » appliqués à la roue : les efforts frontaux résultant du poids du cycliste, et des efforts latéraux résultant du balancement de la bicyclette lors du pédalage ;
- de la sensibilité des demi-ponts de jauges qui dépend, pour les efforts parasites, de l'endroit où est appliquée la force, c'est-à-dire de la position angulaire de la roue.
- de la tension des rayons.

L'étape de calibration comporte la détermination des fonctions $f_{Li}$ et $f_{Fi}$ qui modélisent les sensibilités de chaque demi-pont 28.1, 28.2, 28.3, 28.4 à la force latérale et à la force frontale respectivement en fonction de la position angulaire. $J_1$, $J_2$, $J_3$, $J_4$ sont les signaux ou mesures des demi-ponts 28.1, 28.2, 28.3, 28.4 respectivement.

Par exemple les fonctions $f_{Li}$ et $f_{Fi}$ peuvent être déterminées en appliquant un traitement du signal mettant en oeuvre des techniques qui vont permettre d'extraire les informations du signal en prenant en compte leur périodicité. Des méthodes bien connues peuvent être appliquées, tel que la décomposition en série de Fourier des signaux provenant des jauges :

$$signal_{jauge} \rightarrow \frac{a_0}{2} + \sum_{n=1}^{\infty}(a_n \cos n\theta + b_n \sin n\theta).$$

En prenant en compte l'effet du poids du cycliste P, de l'inclinaison φ et du couple $C_T$, l'équation consiste à calculer la matrice H définie par:

$$\begin{bmatrix} J_1 \\ J_2 \\ J_3 \\ J_4 \end{bmatrix} = H * \begin{bmatrix} C_T \\ P \\ \theta \\ \varphi \end{bmatrix}$$

La matrice H peut être développée de la manière suivante :

$$\begin{bmatrix} J_1 \\ J_2 \\ J_3 \\ J_4 \end{bmatrix} = \begin{matrix} C_T * S(\theta)_{J1} + P * (f_{L1}(\theta)Sin(\varphi)) + (f_{F1}(\theta)) \\ C_T * S(\theta)_{J2} + P * (f_{L2}(\theta)Sin(\varphi)) + (f_{F2}(\theta)) \\ C_T * S(\theta)_{J3} + P * (f_{L3}(\theta)Sin(\varphi)) + (f_{F3}(\theta)) \\ C_T * S(\theta)_{J4} + P * (f_{L4}(\theta)Sin(\varphi)) + (f_{F4}(\theta)) \end{matrix}$$

avec:

- $S(\theta)_{Ji}$, les sensibilités respectives des jauges à la force tangente, avec $\sum_{i=1}^{n} S(\theta)_{Ji} = 1$

- $f_{Li}$ et $f_{Fi}$, les sensibilités des ponts aux efforts latéraux et frontaux respectivement en fonction de la position angulaire de la roue.

Les sensibilités $f_{Li}$, $f_{Fi}$ et $S(\theta)_{Ji}$ sont obtenus à partir de signaux des demi-ponts de jauges sur banc dans des conditions particulières dans lesquelles soit seule une force latérale, soit seule une force frontale est appliquée à la roue.

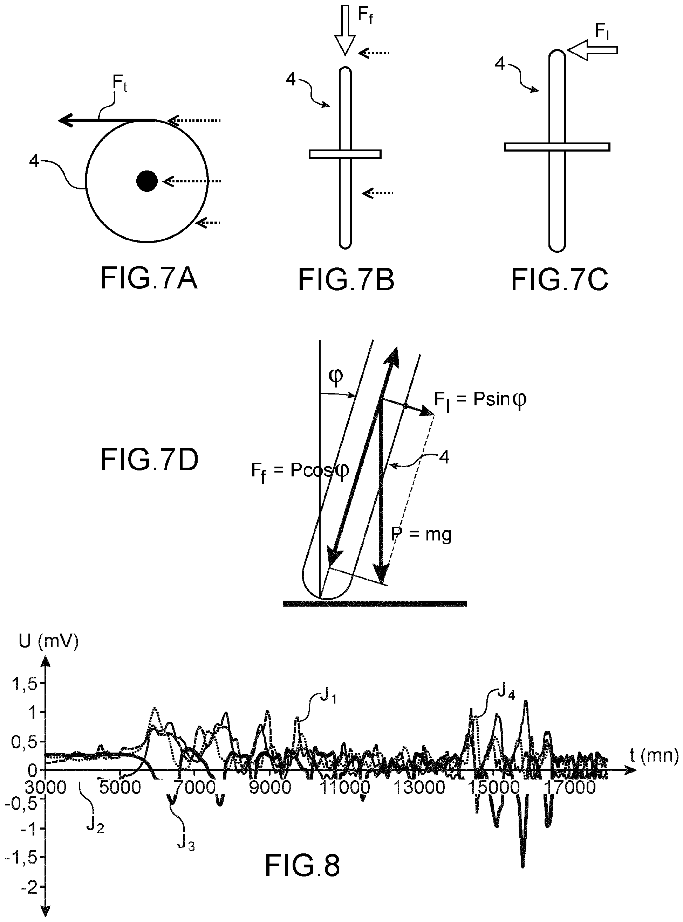

Sur la figure 7A est schématisée la force tangente $F_t$ sur la roue. Sur la figure 7B est schématisée la force frontale $F_f$ sur la roue. Sur la figure 7C est schématisée la force latérale Fl sur la roue.

Dans l'exemple qui va suivre, les sensibilités $f_{Li}$ et $f_{Fi}$ sont déterminés pour le moyeu de la figure 3C, dans lequel le moyeu 406 comporte un anneau extérieur relié au corps central portant le pignon par quatre pattes 434.1, 434.2, 434.3, 434.4 réparties angulairement de manière régulière.

Dans cet exemple, les pattes 434.1 et 434.3 sont alignées radialement avec les oreilles 432.1 et 432.4 et les pattes 434.2 et 434.4 sont alignées radialement avec la zone de connexion des oreilles 432.2 et 432.3 et zone de connexion des oreilles 432.5 et 432.6 respectivement. Les demi-ponts 428.1 à 428.4 sont montés sur les pattes 432.1 à 432.4 respectivement.

Sur la figure 8, on peut voir les signaux en tension U en mV des jauges 28.1 à 28.4 pour le moyeu de la figure 3C en fonction du temps t en ms, ces signaux sont représentatifs à la fois de la force tangente, de la force frontale et la force latérale.

$J_1$, $J_2$ $J_3$, $J_4$ sont les signaux ou mesures des demi-ponts 28.1, 28.2, 28.3, 28.4 respectivement. Il est à noter que l'inversion du signal $J_3$ est uniquement due à un branchement inversé sur le demi-pont 28.3.

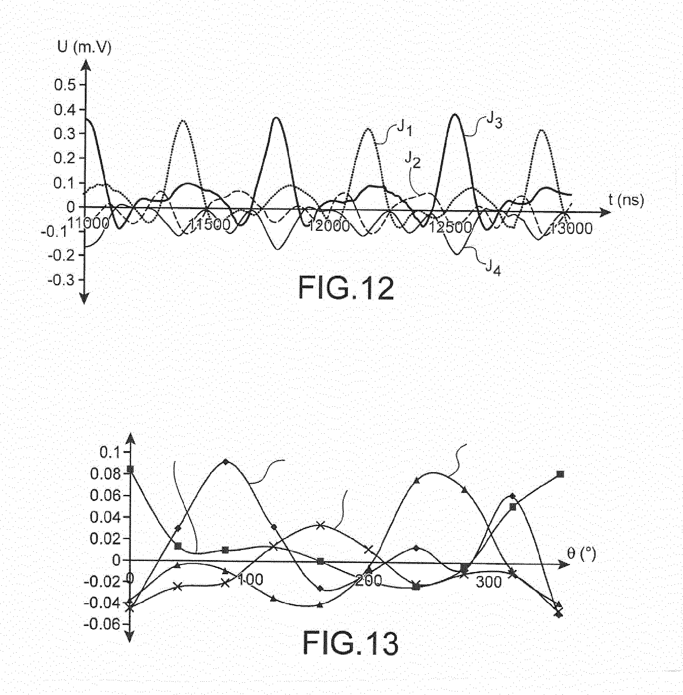

Sur la figure 12, on constate que les signaux $J_1$ et $J_3$ ont des profils proches, et que les signaux $J_2$ et $J_4$ ont des profils proches.

Afin de pouvoir réaliser le traitement des signaux, on détermine préalablement, par exemple sur un banc de mesure, la sensibilité des jauges au couple moteur ou force tangente, la sensibilité à l'effort frontal (poids du cycliste) et la sensibilité à la force latérale résultant du balancement du vélo, en fonction de la position angulaire de la roue

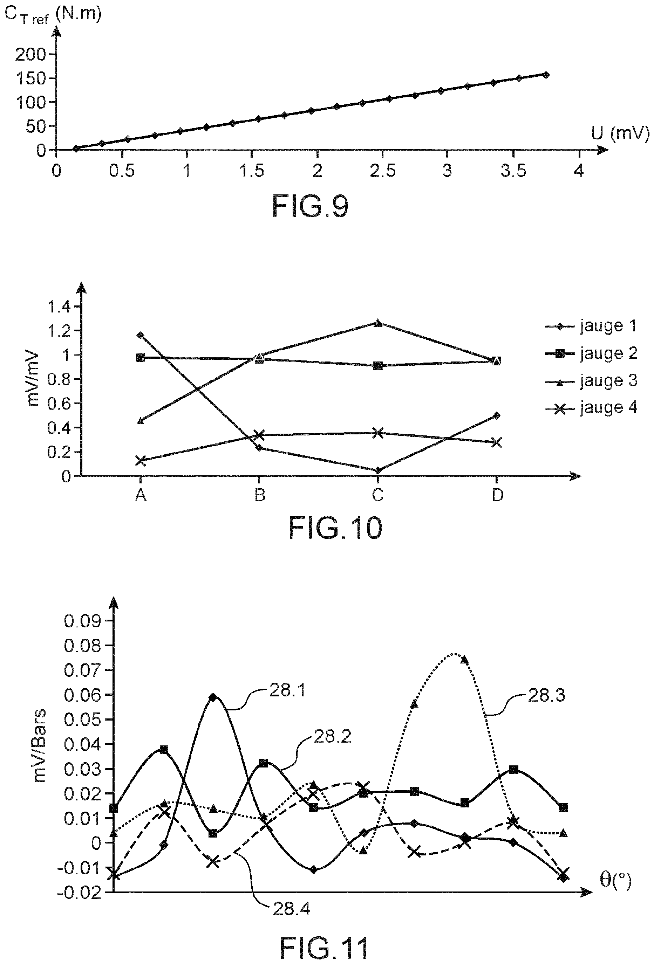

La sensibilité est le rapport entre la mesure d'une jauge en mV et une mesure de référence en mV faite par un capteur de référence, qui fournit une réponse linéaire en fonction de la force appliquée. Le capteur de référence est par exemple un modèle calibré fabriqué par la société SCAIME®, présentant une très bonne précision, i.e. > 0,03 % d'erreur pleine échelle, et une gamme de mesure de 0 à 100 kg. Sur la figure 9, on peut voir la caractéristique couple moteur $C_{Tref}$ en N.m en fonction de la valeur de tension en mV fournie par le capteur de référence.

Sur la figure 10, on peut voir la sensibilité des jauges 28.1 à 28.4 à l'effort tangent Ft ou de propulsion en fonction de la position de la roue, A, B, C, D désignent quatre positions de la roue. Pour cela, on acquiert dans les quatre positions A, B, C, D de la roue, les signaux délivrés par les paires de jauges sur une roue qui ne subit qu'un effort de propulsion, par exemple montée sur un banc de tests, et à laquelle est appliqué un couple. Elle ne subit ni force frontale, ni force latérale.

On constate que cette sensibilité est différente suivant l'emplacement des jauges sur le moyeu. Cette variation de sensibilité est liée au moyeu de la figure 3C qui subit fortement l'effet de la déformation des cliquets. Dans le cas du moyeu de la figure 3A, il n'y a pas une telle variation de sensibilité

Sur la figure 11, on peut voir la sensibilité en mV/Bars des paires de jauges 28.1 à 28.4 à l'effort frontal en fonction de la position angulaire de la roue en °. Pour cela, on acquiert les signaux délivrés par les paires de jauges sur une roue qui ne subit qu'un effort frontal $F_f$, par exemple la roue est montée sur un banc de tests et un vérin exerce un effort vertical vers le bas sur la roue. Les sensibilités des jauges sont désignées par les références des jauges.

La sensibilité des jauges à la force frontale est périodique, il est donc possible de modéliser la variation de la sensibilité des jauges à la force frontale en fonction de la position angulaire de la roue, et donc, à chaque instant en connaissant la position angulaire de la roue et le poids du cycliste, de corriger les mesures pour supprimer l'effet de la force frontale.

A titre de comparaison sur la figure 12, on peut voir les signaux en mV des jauges en fonction du temps en ms émis par les demi-ponts de jauges dans le cas d'une roue montée sur un vélo en roue libre sur un terrain plat et lisse sans pédalage, ce qui revient à mesurer la force frontale, puisque le cycliste n'exerce pas d'effort moteur, ni de force latérale du fait de l'absence de pédalage. On constate que les mesures en conditions réelles et les mesures sur banc sont proches, ce qui valide les mesures sur banc pour déterminer la sensibilité à la force frontale.

Sur la figure 13, on peut voir la sensibilité des jauges 28.1 à 28.4 à la force latérale en fonction de la position angulaire θ de la roue en °. Pour cela, on acquiert les signaux délivrés par les paires de jauges sur une roue qui ne subit qu'une force latérale, par exemple la roue est montée sur un banc et un vérin exerce un effort latéral sur la roue pour un angle donné. Ces mesures sont obtenues pour un angle d'inclinaison φ représenté sur la figure 7D.

Dans l'exemple donné, la détermination des sensibilités s'est faite à intensité de force et à angle d'inclinaison φ constants. En variante, on peut faire varier l'intensité de la force frontale, l'intensité de la force latérale et l'angle d'inclinaison φ.

Comme pour la sensibilité à la force frontale, la sensibilité des jauges à la force latérale est périodique pour une valeur d'angle d'inclinaison, il est donc possible de modéliser la variation de la sensibilité des jauges à la force latérale en fonction de la position angulaire de la roue et en fonction de l'angle d'inclinaison φ, et donc, à chaque instant en connaissant la position angulaire de la roue et le poids du cycliste, de corriger les mesures pour supprimer l'effet de la force frontale. Il est à noter que l'on considère que l'effet du poids du cycliste, lorsque le vélo est incliné d'un angle φ, est équivalent à une force P sin φ appliquée perpendiculairement à la roue.

Dans un exemple avantageux, on peut prévoir un capteur de température par exemple intégré à la carte électronique, permettant de corriger une éventuelle influence de celle-ci.

Un premier exemple de méthode de détermination de la puissance motrice va maintenant être décrit.

La méthode de détermination de la puissance motrice à l'aide du moyeu instrumenté comporte les étapes suivantes :

- Acquisition de signaux $J_1$, $J_2$, $J_3$, $J_4$ émis par les jauges.
- La matrice H obtenue lors de l'étape de calibration est alors inversée,
- A partir de la matrice inversée $H^{-1}$ et des signaux $J_1$, $J_2$, $J_3$, $J_4$, on calcule $C_T$, P, φ, θ.
- Traitement des signaux pour extraire la part relative au couple moteur appliqué à la roue et permettant de déterminer la puissance fournie par le cycliste, et la part relative aux efforts parasites.
- Calcul de la puissance fournie par le cycliste.

Cette méthode présente l'avantage de ne pas avoir à mettre en oeuvre de moyens de mesure de la position angulaire de la roue et de l'angle d'inclinaison de la roue.

Les fonctions représentant les sensibilités $f_{Li}$, $f_{Fi}$ et $S(\theta)_{Ji}$ sont de préférence choisies relativement simples, les rendant compatibles avec les capacités de calcul du microcontrôleur, par exemple avec un algorithme de méthode inverse.

Un moyen de détermination comportant autant de demi-ponts de jauges ou de jauges émettant des signaux distincts que d'inconnues est utilisé pour mettre en oeuvre la méthode selon le premier exemple. Dans le cas où le poids du cycliste n'est pas connu, quatre signaux sont mesurés pour déterminer $C_T$, P, φ, θ. Dans le cas où le poids du cycliste est connu, trois signaux sont mesurés pour mesurer $C_T$, φ, θ.

La puissance motrice étant le produit de $C_T$ et de la vitesse angulaire, il est alors possible de calculer la puissance développée par le cycliste en fonction du temps, en calculant la vitesse angulaire à partir de θ.

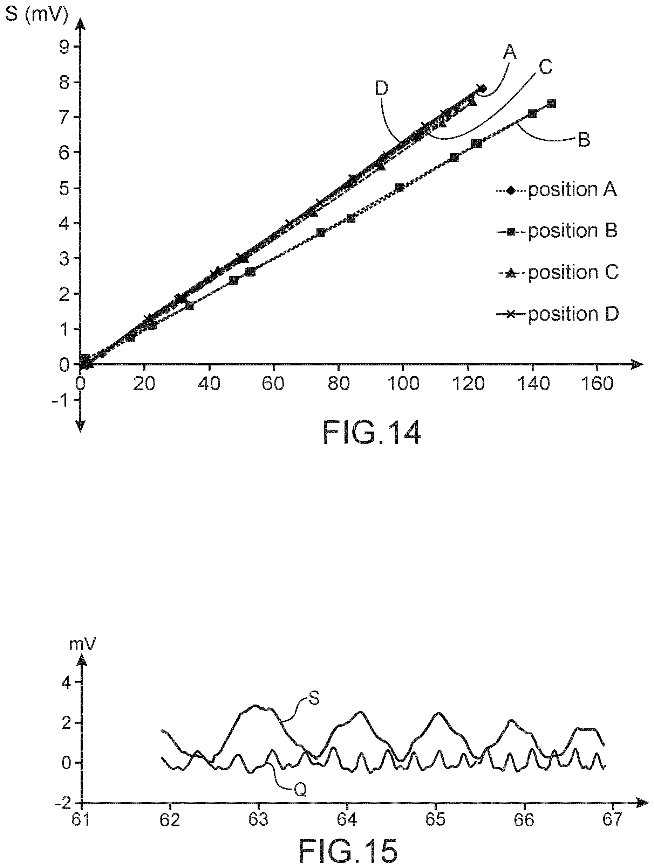

Selon une variante sensiblement simplifiée de la méthode selon le premier exemple, on effectue la somme S des signaux $J_1$, $J_2$, $J_3$, $J_4$ à chaque position angulaire, ce qui permet de supprimer l'effet des cliquets. Cette somme pour chaque position A; B, C et D est représentée sur la figure 14 en fonction du couple appliqué en N.m. Cette méthode ne prend pas en compte la position angulaire de la roue, ni l'inclinaison du vélo.

En comparant la somme $S = J_1 + J_2 + J_3 + J_4$ et la quantité $Q = J_1 + J_3 - J_2 - J_4$ au cours du temps (en abscisse le temps est donné en tours de roue -figure 15), il est possible de dissocier la part de la force tangente et la part d'effort liée au poids, i.e. la force frontale et la force latérale, dans les signaux émis par les jauges. Les quantités S et Q sont représentées sur la figure 15 en fonction du tour de roue. Dans cet exemple φ est nul.

A chaque instant, les quatre-demi ponts voient des forces frontale et latérale qui dépendent de la position angulaire des demi-ponts.

Ainsi dans la quantité Q, la part de la force tangente est supprimée.

Par exemple, en calculant S- Q/2, on obtient une bonne approximation du couple de traction $C_T$. La puissance instantanée est donnée par $C_T$ x θ', θ' étant la vitesse angulaire. Ainsi en connaissant la vitesse angulaire, il est possible de déterminer la puissance instantanée fournie par le cycliste.

Selon un deuxième exemple de procédé de détermination de la puissance motrice, on utilise la vitesse angulaire et l'angle d'inclinaison obtenus par les données d'un gyroscope et/ou d'un accéléromètre comme cela sera décrit ci-dessous. En outre, le poids du cycliste est généralement connu. Cette méthode présente l'avantage de réduire le volume de calcul du microcontrôleur et de permettre une vérification par redondance.

La vitesse angulaire peut être calculée à partir de la position angulaire de la roue qui peut être obtenue, ainsi que l'inclinaison de la roue, à partir des données d'un gyroscope et éventuellement une référence, par exemple fournie par un aimant sur le cadre et un magnétomètre sur le moyeu, par exemple l'axe gy d'un gyroscope donne directement la vitesse angulaire instantanée de la roue.

En variante, La position angulaire de la roue et son inclinaison peuvent être obtenues par fusion des données d'un accéléromètre, d'un gyroscope et d'un magnétomètre.

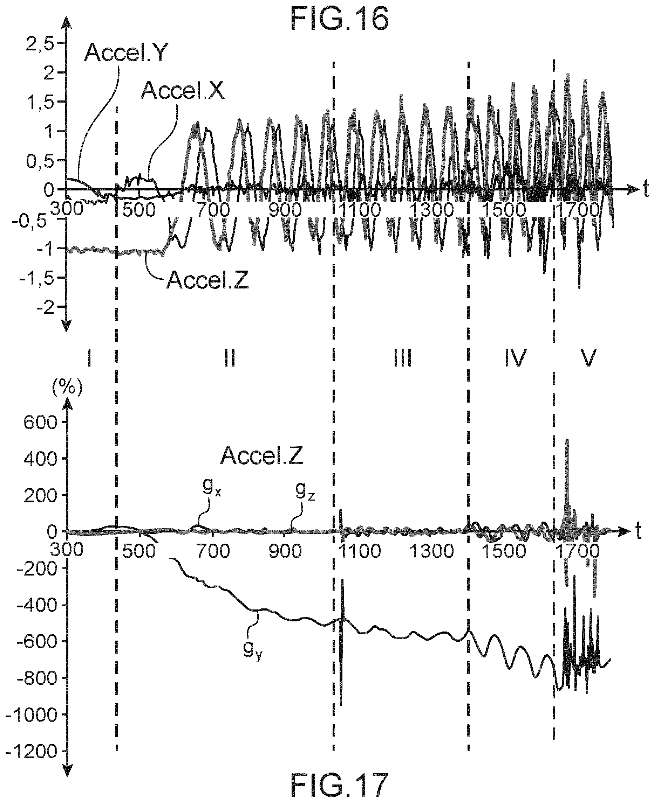

Sur la figure 16, on peut voir les signaux en m/s$^{-2}$ dans les directions X, Y et Z fournis par un accéléromètre embarqué sur le vélo pour trois modes de pédalage et une phase de roue libre.

La période I correspond à un cycliste à l'arrêt. La période II correspond à un cycliste effectuant un pédalage en position assise. La période III correspond à un cycliste effectuant un pédalage en position debout. La période IV correspond à un cycliste en danseuse, et la période V correspond à une phase en roue libre.

Accel X est l'accélération selon la direction X.

Accel Y est l'accélération selon la direction Y.

Accel Z est l'accélération selon la direction Z.

Sur la figure 17, on peut voir les signaux en °/s dans les directions X, Y et Z fournis par un gyroscope embarqué sur le vélo, pour les cinq périodes décrites ci-dessus.

gx est la vitesse angulaire autour de l'axe X.

gy est la vitesse angulaire autour de l'axe Y.

gz est la vitesse angulaire autour de l'axe Z.

A partir des valeurs de $C_T$, de $\theta$, de P et de $\varphi$, il est également possible de déterminer les différents modes de pédalage appliqués par le cycliste.

En effet, lorsque $C_T$ est nul et que $\theta$ varie, le cycliste ne pédale pas et le vélo est en roue libre.

Dans le mode assis, le poids est davantage porté sur la roue arrière, on observe alors une valeur maximale de P.

Dans le mode danseuse, on observe un balancement donc une forte variation de $\varphi$.

L'utilisateur pourra déterminer les seuils selon son poids et son geste.

La figure 18 représente la puissance instantanée en W en fonction du temps t en s, calculée suivants la deuxième méthode.

Pi1 est la puissance instantanée calculée à partir des signaux obtenus grâce au moyeu selon l'invention en calculant le couple moteur à partir de la quantité S-Q/2.

Pi2 est la puissance instantanée calculé à partir des signaux obtenus grâce au moyeu selon l'invention en calculant le couple moteur à partir de la quantité S.

Pi3 est la puissance instantanée calculé à partir d'une mesure de référence prise dans les pédales.

Pint est l'intégrale de la puissance à chaque coup de pédale, la valeur lue est la puissance développée durant le précédent coup de pédale. Le calcul de Pint permet de fournir par exemple au cycliste une information sur la puissance moyenne du coup de pédale précédent plus compréhensible que la puissance instantanée qui varie en permanence.

La puissance instantanée varie de manière sensiblement sinusoïdale, chaque sinusoïde correspondant à un coup de pédale : le début et la fin de chaque coup de pédale est déterminé par le passage par un minium de la valeur du couple moteur avec une valeur inférieure à 10% de la valeur du couple moteur maximal.

On constate, d'une part, que les puissances instantanées Pi1 et Pi2 obtenues grâce aux signaux du moyeu selon l'invention sont cohérentes avec la puissance Pi3 mesurée aux pédales.

La puissance Pi2 est supérieure à la puissance Pi1, car elle intègre toutes les forces parasites.

Sur la figure 19, on peut voir la variation de la puissance instantanée en cours du temps en seconde sur une plus longue période que la figure 18 montrant différents modes de pédalage.

Comme indiqué précédemment, les signaux fournis par les jauges peuvent permettre de distinguer les différents modes de pédalage.

**Revendications**

**1.** Moyeu de roue de cycle permettant la détermination du couple d'entraînement d'une roue de cycle, comportant un axe longitudinal, un corps central (22) destiné à être monté libre en rotation autour d'un arbre central, l'axe longitudinal étant destiné à être coaxial à l'arbre central, des flasques latéraux (24, 26) destinés à la fixation d'une extrémité de rayons de roue, parmi lesquels un flasque latéral de couple (24) destiné à la fixation d'au moins une partie des rayons de transmission (18) transmettant le couple du moyeu à la jante (16), des jauges de déformation et/ou des paires de jauges de déformation (28.1, 28.2, 28.3, 28.4) montées directement sur le flasque latéral de couple (24) en des zones où se concentrent les forces appliquées aux rayons, lesdites jauges de déformation (28.1, 28.2, 28.3, 28.4) étant disposées de sorte à délivrer des signaux permettant de déterminer le couple d'entraînement de la roue.

**2.** Moyeu de roue de cycle selon la revendication 1, dans lequel au moins le flasque latéral de couple (24) comporte des points d'attache des premières extrémités des rayons, et dans lequel les jauges de déformation et/ou paires de jauges de déformation sont situées à proximité de au moins certains points d'attache (32) des rayons (18), avantageusement au plus près des points d'attache.

**3.** Moyeu de roue de cycle selon la revendication 1 ou 2, dans lequel les jauges de chaque paire de jauges de déformation sont montées en demi-pont de Wheatstone, et dans lequel les paires de jauges sont disposées dans des zones du flasque latéral de couple (24) subissant simultanément une traction et une compression.

**4.** Moyeu de roue de cycle selon l'une quelconque des revendications précédentes, dans lequel les paires de jauges de déformation sont montées sur une face extérieure du flasque latéral de couple (24) sensiblement orthogonalement à l'axe longitudinal du moyeu de roue.

**5.** Moyeu de roue de cycle selon la revendication 1 ou 2, dans lequel chaque jauge est disposée sur une zone du flasque latéral de couple subissant à un instant donné une traction ou une compression.

**6.** Moyeu de roue de cycle selon l'une des revendications précédentes, dans lequel le flasque latéral de couple comporte des oreilles (32.1, 32.2, 32.3, 32.4, 32.5, 32.6) en saillie radiale vers l'extérieur, chaque oreille comportant au moins un point de fixation (32) d'un rayon de transmission, chaque jauge ou paire de jauges (28.1, 28.2, 28.3, 28.4) étant disposée sur une oreille.

**7.** Moyeu de roue de cycle selon l'une des revendications 1 à 6, dans lequel les jauges de déformation (28.1, 28.2, 28.3, 28.4) sont des jauges piézorésistives.

**8.** Moyeu de roue de cycle selon l'un des revendications 1 à 7, comportant un nombre de jauges de déformation et/ou de paires de jauges de déformation de sorte à fournir des signaux pour au moins trois positions angulaires distinctes sur le corps central du flasque latéral de couple.

**9.** Système de détermination de la puissance d'entraînement d'une roue de cycle comportant un moyeu de roue de cycle (6) selon l'une des revendications précédentes et des moyens de détermination de la vitesse angulaire du corps du moyeu de roue par rapport à l'arbre central.

**10.** Roue de cycle comportant un moyeu de roue de cycle selon l'une des revendications 1 à 8 ou un système de détermination selon la revendication 9, une jante (16), au moins des rayons de transmission (18) dont une extrémité est attachée au flasque latéral de couple (24) et une autre extrémité est fixée à la jante (16).

**11.** Méthode de détermination du couple d'entraînement mettant en oeuvre un moyeu de roue de cycle selon l'une des revendications 1 à 8, comportant :

a) la collecte des signaux des jauges de déformation,
b) la détermination du couple d'entraînement à partir des signaux des jauges de déformation et d'une relation préalablement déterminée reliant les signaux des jauges et une première sensibilité de chaque jauge ou paire de jauges de déformation à une force tangente résultant du couple d'entrainement en fonction de la position angulaire du moyeu de roue, une deuxième sensibilité de chaque jauge ou paire de jauges de déformation à une force frontale résultant du poids du cycliste en fonction de la position angulaire du moyeu de roue, et une troisième sensibilité de chaque jauge ou paire de jauges de déformation à une force latérale résultant de l'inclinaison du moyeu de roue en fonction de la position angulaire du moyeu de roue.

**12.** Méthode de détermination selon la revendication 11, comportant, préalablement à l'étape a), l'étape de détermination de ladite relation à partir des signaux fournis par les jauges lorsque le moyeu de roue est monté sur un banc de mesure et/ou une étape de réglage des tensions des rayons de transmission comportant :

- collecte des signaux des jauges ou paires de jauges,
- comparaison desdits signaux,
- si la différence entre la valeur d'au moins un signal et les valeurs des autres signaux est supérieure à un seuil donné, un différentiel de tension dans au moins un rayon de transmission par rapport est diagnostiqué,
- détermination du au moins un rayon de transmission présentant un différentiel de tension par rapport aux autres,
- modification de la tension dudit au moins un rayon de transmission,

- vérification de la tension des rayons de transmission.

13. Méthode de détermination selon la revendication 11 ou 12, dans laquelle à l'étape b) le couple de traction $C_T$, le poids P du cycliste, l'inclinaison $\varphi$ de la roue portant le moyeu de roue et la vitesse angulaire $\theta$ de la roue portant le moyeu de roue sont calculés.

14. Méthode de détermination de la puissance d'entraînement comportant la détermination de couple d'entraînement en mettant en oeuvre la méthode selon l'une des revendications 11 à 13, et le calcul du produit de la vitesse angulaire de la roue et du couple d'entraînement.

15. Méthode de détermination du couple d'entraînement selon l'une des revendications 11 à 13, comportant une sous-étape de surveillance de l'état de tension de transmission d'une roue selon la revendication 10, comportant les étapes

- collecte des signaux des jauges ou paires de jauges,
- comparaison desdits signaux,
- si la différence entre la valeur d'au moins un signal et les valeurs des autres signaux est supérieure à un seuil donné, un différentiel de tension dans au moins un rayon de transmission par rapport est diagnostiqué,
- détermination du au moins un rayon de transmission présentant un différentiel de tension par rapport aux autres,
- modification de la tension dudit au moins un rayon de transmission,
- vérification de la tension des rayons de transmission.

FIG.1

FIG.2

FIG.3A

FIG.3B

FIG.3C

FIG.4

FIG.5

FIG.6

FIG.7A    FIG.7B    FIG.7C

FIG.7D

$$F_l = P\sin\varphi$$

$$F_f = P\cos\varphi$$

$$P = mg$$

FIG.8

FIG.9

FIG.10

FIG.11

FIG.12

FIG.13

FIG.14

FIG.15

FIG.16

FIG.17

FIG.18

FIG.19

FIG.20

**Europäisches Patentamt**

**European Patent Office**

**Office européen des brevets**

# RAPPORT DE RECHERCHE EUROPEENNE

Numéro de la demande

EP 19 18 6197

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 99/45350 A1 (TUNE CORP [US]) 10 septembre 1999 (1999-09-10) | 1-5,7-10 | INV. G01L3/14 |
| A | * abrégé; figures * * page 9, ligne 14 - page 16, ligne 9 * ----- | 6,11-15 | B62M6/00 |
| X | WO 2008/021106 A2 (MTS SYSTEM CORP [US]; MEYER RICHARD A [US] ET AL.) 21 février 2008 (2008-02-21) | 1-5,7,8, 10 | |
| A | * abrégé; figures * * page 4, ligne 2 - page 9, ligne 4 * ----- | 6,11-15 | |

DOMAINES TECHNIQUES RECHERCHES (IPC)

G01L
B62M

Le présent rapport a été établi pour toutes les revendications

| Lieu de la recherche | Date d'achèvement de la recherche | Examinateur |
|---|---|---|
| La Haye | 19 novembre 2019 | Amroun, Sébastien |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 18 6197

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-11-2019

| Document brevet cité au rapport de recherche | Date de publication | Membre(s) de la famille de brevet(s) | Date de publication |
|---|---|---|---|
| WO 9945350 A1 | 10-09-1999 | AT 310235 T<br>AU 2892799 A<br>DE 69928397 T2<br>EP 1082592 A1<br>US 6418797 B1<br>WO 9945350 A1 | 15-12-2005<br>20-09-1999<br>10-08-2006<br>14-03-2001<br>16-07-2002<br>10-09-1999 |
| WO 2008021106 A2 | 21-02-2008 | CN 101501467 A<br>EP 2057449 A2<br>JP 2010500561 A<br>US 2008034894 A1<br>WO 2008021106 A2 | 05-08-2009<br>13-05-2009<br>07-01-2010<br>14-02-2008<br>21-02-2008 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3001290